# EUROPÄISCHE PATENTSCHRIFT

(11) **EP 2 702 685 B1**
(45) Veröffentlichungstag und Bekanntmachung des Hinweises auf die Patenterteilung: **11.03.2020**
(21) Anmeldenummer: 12725668.3
(22) Anmeldetag: 22.05.2012
(51) Int. Cl.: H02P 9/14

(54) **VERFAHREN ZUM BETRIEB EINES GENERATORS IN EINEM ELEKTRISCHEN NETZ SOWIE ELEKTRISCHES NETZ MIT EINEM DERARTIGEN GENERATOR**
METHOD FOR OPERATING A GENERATOR IN AN ELECTRICAL SYSTEM, AND ELECTRICAL SYSTEM HAVING SUCH A GENERATOR
PROCÉDÉ DE FONCTIONNEMENT D'UN GÉNÉRATEUR DANS UN RÉSEAU ÉLECTRIQUE ET RÉSEAU ÉLECTRIQUE COMPRENANT UN GÉNÉRATEUR DE CE TYPE

(30) Priorität: 30.05.2011 DE 102011076681
(43) Veröffentlichungstag der Anmeldung: 05.03.2014
(73) Patentinhaber: Siemens Aktiengesellschaft, 80333 München (DE)
(72) Erfinder: GRUNDMANN, Jörn, 91091 Großenseebach (DE); HARTIG, Rainer, 21614 Buxtehude (DE); KUMMETH, Peter, 91074 Herzogenaurach (DE); VAN HASSELT, Peter, 91058 Erlangen (DE)
(86) Internationale Anmeldenummer: PCT/EP2012/059494
(87) Internationale Veröffentlichungsnummer: WO 2012/163731

(56) Entgegenhaltungen:
- DE-A1-102009 043 530
- JP-A- H04 285 500
- US-A1- 2003 039 130

## Beschreibung

Die Erfindung betrifft ein Verfahren zum Betrieb eines Generators in einem elektrischen Netz sowie ein elektrisches Netz mit einem derartigen Generator.

Elektrische Inselnetze an Bord von Schiffen oder Offshore-Plattformen weisen oftmals mehrere Spannungsebenen mit jeweils unterschiedlichen Nennspannungen auf. Jede dieser Spannungsebenen bildet ein separates Teilnetz aus. Elektrische Großverbraucher wie z.B. elektrische Propulsionsantriebsmotoren werden beispielsweise aus einem ersten Teilnetz mit einer Nennspannung von 3.3 kVac mit elektrischer Energie versorgt.

Hilfsbetriebe für den Betrieb dieser Großverbraucher sowie weitere Niederspannungsverbraucher wie z.B. Beleuchtung, Belüftung, Klimaanlage, Lautsprecheranlage, Automationssysteme etc. werden dagegen aus einem zweiten Teilnetz mit einer kleineren Nennspannung von beispielsweise 400Vac, oder einem weiteren Teilnetz, das wiederum aus dem zweiten Teilnetz gespeist wird, mit elektrischer Energie versorgt.

Die elektrische Energie für das erste Teilnetz mit der vergleichsweise größten Nennspannung wird üblicherweise durch einen oder mehrere Generatoren erzeugt, die an das erste Teilnetz angeschlossen sind und elektrische Energie in dieses erste Teilnetz einspeisen. Häufig sind sämtliche Teilnetze sukzessive in der Reihenfolge ihrer Nennspannung über Spannungswandler (z.B. Transformatoren) miteinander elektrisch gekoppelt, so dass der oder die Generatoren letztendlich über das erste Teilnetz beispielsweise das damit gekoppelte zweite Teilnetz, über das zweite Teilnetz wiederum ein drittes Teilnetz, das mit dem zweiten Teilnetz gekoppelt ist, und darüber wiederum weitere untergeordnete Teilnetze mit elektrischer Energie versorgen.

Die Generatoren sind häufig als eine Synchronmaschine mit einer rotierenden Erregerwicklung ausgebildet, die in einem Normalbetrieb des Generators, in dem er Strom in das erste Teilnetz einspeist, mit einem ersten Erregerstrom beaufschlagt wird, der an die Nennspannung des ersten Teilnetzes angepasst ist.

Der Generator umfasst häufig auch eine Kühleinrichtung zur Kühlung der Erregerwicklung bzw. darüber hinaus zur Kühlung des gesamten Generators, wobei die Kühleinrichtung üblicherweise aus dem zweiten Teilnetz oder aus einem weiteren Teilnetz, das direkt oder indirekt aus dem zweiten Teilnetz gespeist wird, mit Strom versorgt wird.

Eine derartige Kühleinrichtung ist vor allem notwendig, wenn die Erregerwicklung als eine Supraleiter-Wicklung, insbesondere eine Hoch-Temperatur-Supraleiter (HTS)- Wicklung, ausgebildet ist.

Die Kühleinrichtung umfasst dann beispielsweise einen Kaltkopf, der wiederum durch einen Kühlkreislauf mit einem Kompressor rückgekühlt wird.

Ein ganzer oder teilweiser Ausfall der Kühleinrichtung, z.B. aufgrund eines Störfalls in dem elektrischen Netz oder aufgrund eines Defekts der Kühleinrichtung selbst, führt zu einer Erwärmung der Erregerwicklung. Je nachdem wie lange der Ausfall andauert, kann sich die Erregerwicklung so stark erwärmen, dass ihr Betrieb mit dem ersten Nennstrom nicht mehr möglich ist und somit der Generator keinen Strom mehr in das erste Teilnetz einspeisen kann, da er die erforderliche Nennspannung nicht erreicht.

Um einen derartigen Ausfall der Stromversorgung zumindest teilweise zu kompensieren, kann eine Notstromversorgung (z.B. ein zusätzliches Dieselaggregat) bereitgestellt werden, die jedoch zusätzlichen Platz benötigt, der an Bord eines Schiffes oder einer Offshore-Plattform knapp ist, und mit zusätzlichen Kosten verbunden ist.

Aus der WO 00/13304 ist ein Verfahren zur Regelung eines Generators bekannt, bei dem der Erregerstrom bei Überschreiten einer Grenztemperatur des Generators reduziert wird.

DE 10 2009 043 530 A1 offenbart ein Bordnetz eines Wasserfahrzeuges mit zwei elektrischen Teilnetzen und Synchrongenerator mit einer rotierenden Hoch-Temperatur-Supraleiter-Wicklung. Aus US 2003/0039130 A1 ist ein Generator bekannt, welcher zwei Netze versorgen kann. Mittels elektronischer Schalter versorgt der Generator in unterem Drehzahlbereich ein Netz mit niedriger Spannung. Bei höherer Drehzahl wird ein zweites Netz mit höherem Spannung von dem Generator versorgt.

Es ist Aufgabe vorliegender Erfindung, bei einem Verfahren zum Betrieb eines Generators in einem elektrischen Netz bzw. bei einem elektrischen Netz mit einem derartigen Generator Beeinträchtigungen oder sogar Ausfallzeiten des elektrischen Netzes bei einem Ausfall der Kühleinrichtung möglichst gering zu halten, ohne dass zusätzliche Notstromversorgungseinrichtungen notwendig sind.

Die Aufgabe wird gelöst durch ein Verfahren zum Betrieb eines Generators in einem elektrischen Netz, wobei das elektrische Netz ein erstes Teilnetz mit einer ersten Nennspannung und zumindest ein zweites Teilnetz mit einer zweiten Nennspannung umfasst, wobei die erste Nennspannung größer ist als die zweite Nennspannung,
wobei der Generator eine Erregerwicklung aufweist, die in einem Normalbetrieb des Generators, in dem er Strom in das erste Teilnetz einspeist, mit einem ersten Erregerstrom beaufschlagt wird, der an die erste Nennspannung des ersten Teilnetzes angepasst ist,
und wobei der Generator eine Kühleinrichtung zur Kühlung der Erregerwicklung umfasst,
wobei der Generator nach einem Ausfall der Kühleinrichtung von dem Normalbetrieb in einen Notbetrieb umgeschaltet wird, in dem er Strom in das zweite Teilnetz einspeist, wobei in dem Notbetrieb die Erregerwicklung mit einem zweiten Erregerstrom beaufschlagt wird, der kleiner ist als der erste Erregerstrom und der an die zweite Nennspannung des zweiten Teilnetzes angepasst ist.

Die Erfindung geht von der Erkenntnis aus, dass nach einer Erwärmung der Erregerwicklung zwar keine Beaufschlagung der Erregerwicklung mit dem ersten Erregerstrom mehr möglich ist, aber noch mit einem zweiten Erregerstrom, der entsprechend der höheren Temperatur der Erregerwicklung reduziert ist und somit kleiner als der erste Erregerstrom ist. Ein derartig reduzierter Erregerstrom reduziert zwar die Ausgangsspannung des Generators derart, dass keine Einspeisung von Strom mehr in das erste Teilnetz möglich ist. Die Ausgangsspannung kann jedoch noch ausreichend sein, um Strom in das zweite Teilnetz mit der niedrigeren Nennspannung als das erste Teilnetz einspeisen zu können. Durch die Umschaltung des Generators von dem Normalbetrieb in den Notbetrieb kann somit ohne größere Ausfallzeiten eine Notstromversorgung für das zweite Teilnetz und aus diesem direkt oder indirekt gespeiste weitere Teilnetze bereitgestellt werden, ohne dass zusätzliche Notstromversorgungseinrichtungen notwendig sind.

Im Falle eines Generators mit einer HTS-Erregerwicklung, der im Normalbetrieb in ein Teilnetz mit einer Nennspannung von 3.3 kVac einspeist, würde ein zweiter Erregerstrom, der nur ca. 12 % des ersten Erregerstromes beträgt, ausreichen, um ein zweites Teilnetz mit einer Nennspannung von 400 Vac aufzubauen. Bei weicheisenhaltigen Maschinen kann der zweite Erregerstrom sogar unter 10 % des ersten Erregerstromes liegen.

Wenn der Ausfall der Kühleinrichtung durch einen Defekt in der Kühleinrichtung selbst bedingt war, kann die Kühleinrichtung während der Zeit des Notbetriebs repariert und danach wieder aktiviert werden. Wenn der Ausfall der Kühleinrichtung durch einen Ausfall ihrer Stromversorgung bedingt war, kann mit diesem Notbetrieb wieder eine Stromversorgung für die Kühleinrichtung bereitgestellt und somit die Kühlung der Erregerwicklung wieder aufgenommen werden. Dieser Vorteil kommt insbesondere dann zum Tragen, wenn die Kühleinrichtung, vorzugsweise auch weitere Hilfsbetriebe für den Betrieb des Generators, aus dem zweiten Teilnetz oder aus einem weiteren Teilnetz, das direkt oder indirekt aus dem zweiten Teilnetz gespeist wird, mit Strom versorgt wird bzw. werden.

Sobald die Erregerwicklung dann wieder auf eine vorgegebene Betriebstemperatur abgekühlt worden ist, kann der Generator wieder von dem Notbetrieb in den Normalbetrieb umgeschaltet werden, in dem er Strom in das erste Teilnetz einspeist.

Gemäß einer besonders vorteilhaften Ausgestaltung erfolgt die Umschaltung des Generators von dem Normalbetrieb in den Notbetrieb erst nach Ablauf einer vordefinierten Zeitspanne nach dem Ausfall der Kühleinrichtung oder nach Feststellung einer Erwärmung der Erregerwicklung auf eine vorgegebene Temperatur. Hierbei liegt die Erkenntnis zugrunde, dass durch entsprechende Auslegung und Ausführung des Generators eine Zeitspanne bzw. eine Temperatur definiert werden kann, in der bzw. bis zu der trotz Ausfall der Kühleinrichtung die Erregerwicklung des Generator noch mit dem ersten Erregerstrom, d.h. mit voller Erregung, beaufschlagt werden kann. Diese Zeitspanne bzw. diese Temperatur ist wesentlich bestimmt von der Ausnutzung des Leiters (im Fall eines Supraleiters von dem Abstand des Betriebsstroms zum kritischen Strom der Wicklung am Betriebspunkt), wodurch sich eine maximal erlaubte Wicklungstemperatur oberhalb der normalen Betriebstemperatur ergibt, bei der gerade noch der volle erste Erregerstrom in der Erregerwicklung zulässig ist. In Verbindung mit den thermischen Verlusten im Läufer und dessen integraler Wärmekapazität kann diese Zeitspanne bzw. Temperatur gezielt beeinflusst werden.

Bevorzugt ist der Generator als eine Synchronmaschine mit einer rotierenden Erregerwicklung ausgebildet.

Die Vorteile der Erfindung kommen insbesondere dann zum Tragen, wenn die Erregerwicklung als eine Supraleiter-Wicklung, insbesondere eine Hoch-Temperatur-Supraleiter (HTS)- Wicklung, ausgebildet ist, da dann ein besonderer Kühlbedarf für die Erregerwicklung besteht.

Die Vorteile der Erfindung kommen weiterhin insbesondere dann zum Tragen, wenn das elektrische Netz als ein Inselnetz, insbesondere als ein Bordnetz eine Schiffes oder einer Offshore-Plattform, ausgebildet ist, da dort die Anzahl der Generatoren begrenzt und somit die Wahrscheinlichkeit für einen Störfall in dem elektrischen Netz größer ist als in einem Verbundnetz.

Dies gilt insbesondere auch dann, wenn die Teilnetze über einen oder mehrere Spannungswandler, insbesondere Transformatoren, elektrisch miteinander gekoppelt sind. Durch eine Einspeisung in das erste Teilnetz mit der ersten Nennspannung kann dann eine Versorgung der anderen Teilnetze mit vergleichsweise kleineren Nennspannungen erfolgen, wodurch separate Generatoren oder andere Energieerzeuger für die anderen Teilnetze entfallen können. Allerdings führt ein Ausfall der Einspeisung in das erste Teilnetz auch zu einem Ausfall der Stromversorgung für die anderen Teilnetze.
Die Lösung der auf das elektrische Netz gerichteten Aufgabe gelingt durch ein elektrisches Netz, umfassend
- ein erstes Teilnetz mit einer ersten Nennspannung und ein zweites Teilnetz mit einer zweiten Nennspannung, wobei die erste Nennspannung größer ist als die zweite Nennspannung,
- zumindest einen Generator mit einer Erregerwicklung, wobei der Generator in einem Normalbetrieb, in dem er Strom in das erste Teilnetz einspeist, mit einem ersten Erregerstrom beaufschlagbar ist, der an die erste Nennspannung des ersten Teilnetzes angepasst ist,
- wobei der Generator eine Kühleinrichtung zur Kühlung der Erregerwicklung umfasst,
wobei der Generator derart ausgebildet ist, dass er von dem Normalbetrieb in einen Notbetrieb umschaltbar ist, in dem er Strom in das zweite Teilnetz einspeist, wobei in dem Notbetrieb die Erregerwicklung mit einem zweiten Erregerstrom beaufschlagbar ist, der kleiner ist als der erste Erregerstrom und der an die zweite Nennspannung des zweiten Teilnetzes angepasst ist.

Die für das erfindungsgemäße Verfahren genannten Vorteile gelten entsprechend für das erfindungsgemäße elektrische Netz.

Bevorzugt ist die Kühleinrichtung, und vorzugsweise sind auch weitere Hilfsbetriebe für den Betrieb des Generators, zur Stromversorgung an das zweite Teilnetz oder an ein weiteres direkt oder indirekt aus dem zweiten Teilnetz gespeisten Teilnetz angeschlossen.

Die Umschaltung von Normalbetrieb auf Notbetrieb ist zwar grundsätzlich auch händisch durch Bedienpersonal des elektrischen Netzes möglich. Bevorzugt umfasst das elektrische Netz aber eine Steuer- und/oder Regelungseinrichtung zur automatisierten Umschaltung von Normalbetrieb auf Notbetrieb. Mit der Steuer- und/oder Regelungseinrichtung ist auch eine Steuerung und/oder Regelung des Erregerstromes möglich.Bevorzugt ist die Steuer- und/oder Regelungseinrichtung derart ausgebildet, dass sie den Generator erst nach Ablauf einer vordefinierten Zeitspanne nach dem Ausfall der Kühleinrichtung oder nach Feststellung einer Erwärmung der Erregerwicklung auf eine vorgegebene Temperatur von dem Normalbetrieb in den Notbetrieb umschaltet.

Gemäß einer weiteren vorteilhaften Ausgestaltung ist die Steuer- und/oder Regelungseinrichtung derart ausgebildet, dass sie den Generator nach Abkühlung der Erregerwicklung auf eine vorgegebene Temperatur von dem Notbetrieb in den Normalbetrieb umschaltet.

Gemäß einer konstruktiv besonders einfachen Ausgestaltung weist das elektrische Netz einen Wechselschalter zum wahlweisen Anschluss des Generators an das erste oder an das zweite Teilnetz auf.

Von Vorteil ist der Generator als eine Synchronmaschine mit einer rotierenden Erregerwicklung ausgebildet.

Bevorzugt ist die Erregerwicklung als eine Supraleiter-Wicklung, insbesondere eine Hoch-Temperatur-Supraleiter (HTS)- Wicklung, ausgebildet.

Das elektrische Netz ist gemäß einer besonders vorteilhaften Ausgestaltung als ein Inselnetz, insbesondere als ein Bordnetz eine Schiffes oder einer Offshore-Plattform, ausgebildet.

Gemäß einer weiteren vorteilhaften Ausgestaltung sind die Teilnetze über einen oder mehrere Spannungswandler, insbesondere Transformatoren, miteinander gekoppelt.

Die für das erfindungsgemäße Verfahren und seine vorteilhaften Ausgestaltungen genannten Vorteile gelten entsprechend für das erfindungsgemäße elektrische Netz und seine jeweils korrespondierenden vorteilhaften Ausgestaltungen.

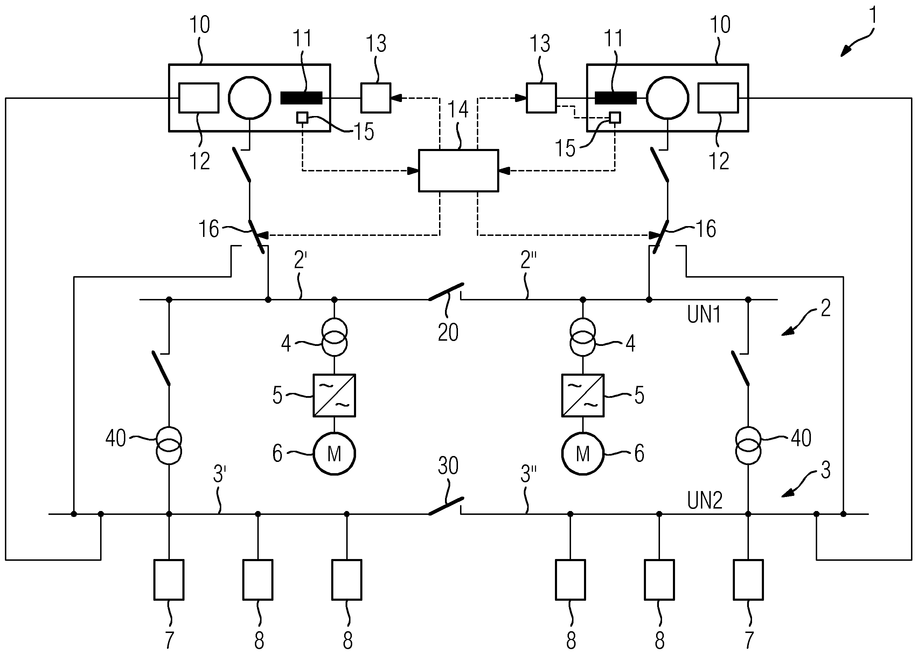

Die Erfindung sowie weitere vorteilhafte Ausgestaltungen der Erfindung gemäß Merkmalen der Unteransprüche werden im Folgenden anhand eines Ausführungsbeispieles in der Figur näher erläutert. Diese zeigt ein elektrisches Netz 1, das als ein Inselnetz ausgebildet ist. Bei dem elektrischen Netz 1 handelt es sich beispielsweise um ein Bordnetz eines Schiffes oder einer Offshore-Plattform.

Das elektrische Netz 1 umfasst ein erstes Teilnetz 2 mit einer ersten Nennspannung UN1 und ein zweites Teilnetz 3 mit einer zweiten Nennspannung UN2, wobei die erste Nennspannung UN1 größer ist als die zweite Nennspannung UN2. Bei dem ersten Teilnetz 2 handelt es sich beispielsweise um ein Mittelspannungsnetz mit einer Nennspannung UN1 = 3.3 kVac und bei dem zweiten Teilnetz 3 um eine Niederspannungsnetz mit einer Nennspannung UN2 = 400Vac.

Aus Redundanzgründen besteht das erste Teilnetz 2 wiederum aus zwei Teilen 2', 2", die miteinander über eine Netzkupplung 20 koppelbar sind. In entsprechender Weise besteht das Teilnetz 3 wiederum aus zwei Teilen 3', 3", die miteinander über eine Netzkupplung 30 koppelbar sind.

Die beiden Teilnetze 2, 3 sind über Transformatoren 40 miteinander gekoppelt, so dass durch eine Stromeinspeisung in das erste Teilnetz 2 auch das zweite Teilnetz 3 mit Strom versorgbar ist.

Aus dem ersten Teilnetz 2 werden elektrische Großverbraucher wie z.B. elektrische Propulsionsantriebsmotoren 6 über jeweils einen Transformator 4 und einen Umrichter 5 mit elektrischer Energie versorgt. Aus dem zweiten Teilnetz werden Hilfsbetriebe 7 für den Betrieb dieser Großverbraucher sowie weitere Niederspannungsverbraucher 8 wie z.B. Beleuchtung, Belüftung / Klimaanlage, Lautsprecheranlage und Automationssysteme mit elektrischer Energie versorgt.

Jeweils ein als eine Synchronmaschine ausgebildeter Generator 10 mit einer rotierenden Erregerwicklung 11 ist zur Stromerzeugung für jeweils einen der Teile 2', 2" des ersten Teilnetzes 2 vorhanden. Die Erregerwicklung 11 ist als eine Supraleiter-Wicklung, insbesondere eine Hoch-Temperatur-Supraleiter (HTS)- Wicklung, ausgebildet. Zu jedem Generator 10 gehört weiterhin jeweils eine Kühleinrichtung 12 zur Kühlung der (HTS-)Erregerwicklung 11. Die Kühleinrichtung 12 ist zur Stromversorgung an das zweite Teilnetz 3 angeschlossen. Die Erregerwicklung 11 wird aus einer Gleichstromversorgungseinrichtung 13 mit Gleichstrom versorgt.

Der Generator 10 ist in einem Normalbetrieb, in dem er Strom in das erste Teilnetz 2 einspeist, mit einem ersten Erregerstrom beaufschlagbar, der an die Nennspannung UN1 des ersten Teilnetzes 2 angepasst ist.

Der Generator ist außerdem derart ausgebildet ist, dass er von dem Normalbetrieb in einen Notbetrieb umschaltbar ist, in dem er Strom in das zweite Teilnetz 3 einspeist, wobei in dem Notbetrieb die Erregerwicklung 11 mit einem zweiten Erregerstrom beaufschlagbar ist, der kleiner ist als der erste Erregerstrom und der an die Nennspannung UN2 des zweiten Teilnetzes 3 angepasst ist.

Zur Steuerung und/oder Regelung der Betriebsart des Generators (d.h. Normalbetrieb oder Notbetrieb) und somit des Erregerstromes durch die Erregerwicklungen 11 ist eine Steuer- und/oder Regelungseinrichtung 14 vorhanden, die für jede der Erregerwicklungen 11 jeweils einen Sensor 15 oder eine andere geeignete Einrichtung (z.B. auf Basis von physikalischen Modellen) zur Messung oder Ermittlung der Temperatur der jeweiligen Erregerwicklung 11 umfasst.

Jeweils ein Wechselschalter 16 dient zum wahlweisen Anschluss des jeweiligen Generators 10 an das erste Teilnetz 2 oder an das zweite Teilnetz 3.

In einem Normalbetrieb speist jeder der Generatoren 10 Strom direkt in das erste Teilnetz 2 ein. Die Steuer- und/oder Regelungseinrichtung 14 steuert dabei beide Gleichstromversorgungseinrichtungen 13 derart an, dass die jeweilige Erregerwicklung 11 mit einem ersten Erregerstrom beaufschlagt wird, der an die Nennspannung UN1 des ersten Teilnetzes 2 angepasst ist. Die Erregerwicklung 11 der Generatoren 10 wird dabei durch deren jeweilige Kühleinrichtung 12 gekühlt, die aus dem zweiten Teilnetz 3 mit Strom versorgt wird.

Kommt es zum Beispiel aufgrund einer Störung im Teilnetz 3 oder aufgrund eines Defektes in der Kühleinrichtung 12 selbst zu einem Ausfall der Kühlung der Erregerwicklung 11 eines der Generatoren 10, so wartet die Steuer- und/oder Regelungseinrichtung 14 zuerst für eine vorgegebene Zeitspanne, ob die Kühlung durch die Kühleinrichtung 12 wieder aufgenommen wird. Diese Zeitspanne ist wesentlich bestimmt von der Ausnutzung des Leiters (im Fall des HTS-Leiters von dem Abstand des Betriebsstroms zum kritischen Strom der Wicklung am Betriebspunkt), wodurch sich eine maximal erlaubte Wicklungstemperatur oberhalb der normalen Betriebstemperatur ergibt, bei der gerade noch der volle erste Erregerstrom in der Erregerwicklung 11 zulässig ist.

Kommt es bis zum Ablauf dieser Zeitspanne zu keiner Wiederaufnahme der Kühlung der Erregerwicklung 11 durch die Kühleinrichtung 12, so schaltet die Steuer- und/oder Regelungseinrichtung 14 den betroffenen Generator 10 von dem Normalbetrieb in einen Notbetrieb um, in dem er Strom direkt in das zweite Teilnetz 3 einspeist. Die Steuer- und/oder Regelungseinrichtung 14 trennt hierzu den Generator 10 mittels des Wechselschalters 16 von dem ersten Teilnetz 2 und verbindet ihn mit dem zweiten Teilnetz 3. Weiterhin steuert die Steuer- und/oder Regelungseinrichtung 14 die Gleichstromversorgungseinrichtung 13 des betroffnen Generators derart an, dass die jeweilige Erregerwicklung 11 mit einem zweiten Erregerstrom beaufschlagt wird, der kleiner ist als der erste Erregerstrom und der an die Nennspannung UN2 des zweiten Teilnetzes 2 angepasst ist.

Anstatt die vorgegebene Zeitspanne bis zur Umschaltung von dem Normalbetrieb in den Notbetrieb abzuwarten, kann alternativ durch die Steuer- und/oder Regelungseinrichtung 14 über den Sensor 15 oder eine andere geeignete Einrichtung auch die Temperatur der Erregerwicklung 11 ermittelt werden und die Umschaltung von dem Normalbetrieb in den Notbetrieb erfolgen, wenn ein Erreichen der maximal erlaubten Wicklungstemperatur festgestellt wird.

Hierdurch wird die Betriebsfähigkeit des betroffenen Generators 10 verlängert und durch den betroffenen Generator 10 eine Notstromversorgung für das zweite Teilnetz 3 bzw. den betroffenen Teil 3', 3" des zweiten Teilnetzes und etwaige direkt oder indirekt daraus gespeiste weitere Teilnetze bereitgestellt. Eine separate Notstromversorgungseinrichtung ist dadurch nicht notwendig.

Im Fall eines Defektes der Kühleinrichtung 12 kann diese nun repariert werden. Im Fall, dass der Ausfall der Kühleinrichtung 12 durch einen Ausfall der Stromversorgung im zweiten Teilnetz 3 verursacht worden war, kann durch die nunmehr vorliegende direkte Einspeisung des betroffenen Generators 10 in das zweite Teilnetz 3 die Stromversorgung wiederhergestellt werden.

Die Steuer- und/oder Regelungseinrichtung 14 misst über den Sensor 15 die Temperatur der Erregerwicklung 11. Nach Abkühlung der Erregerwicklung 11 auf eine vorgegebene Temperatur schaltet die Steuer- und/oder Regelungseinrichtung 14 den betroffenen Generator 10 wieder von dem Notbetrieb in den Normalbetrieb um.

Die Steuer- und/oder Regelungseinrichtung 14 trennt hierzu den Generator 10 mittels des Wechselschalters 16 von dem zweiten Teilnetz 3 und verbindet ihn wieder mit dem ersten Teilnetz 2. Weiterhin steuert die Steuer- und/oder Regelungseinrichtung 14 die Gleichstromversorgungseinrichtung 13 des Generators 10 derart an, dass dessen Erregerwicklung 11 wieder mit dem ersten Erregerstrom beaufschlagt wird, der an die Nennspannung UN1 des ersten Teilnetzes 2 angepasst ist. Nun ist die volle Betriebsfähigkeit des elektrischen Netzes 1 wieder hergestellt.

## Patentansprüche

1. Verfahren zum Betrieb eines Generators (10) in einem elektrischen Netz (1), wobei das elektrische Netz (1) ein erstes Teilnetz (2) mit einer ersten Nennspannung (UN1) und zumindest ein zweites Teilnetz (3) mit einer zweiten Nennspannung (UN2) umfasst, wobei die erste Nennspannung (UN1) größer ist als die zweite Nennspannung (UN2),
wobei der Generator (10) eine Erregerwicklung (11) aufweist, die in einem Normalbetrieb des Generators (10), in dem er Strom in das erste Teilnetz (2) einspeist, mit einem ersten Erregerstrom beaufschlagt wird, der an die erste Nennspannung (UN1) des ersten Teilnetzes (2) angepasst ist,
und wobei der Generator (10) eine Kühleinrichtung (12) zur Kühlung der Erregerwicklung (11) umfasst, **dadurch gekennzeichnet dass**
der Generator (10) nach einem Ausfall der Kühleinrichtung (12) von dem Normalbetrieb in einen Notbetrieb umgeschaltet wird, in dem er Strom in das zweite Teilnetz (3) einspeist, wobei in dem Notbetrieb die Erregerwicklung (11) mit einem zweiten Erregerstrom beaufschlagt wird, der kleiner ist als der erste Erregerstrom und der an die zweite Nennspannung (UN2) des zweiten Teilnetzes (3) angepasst ist.

2. Verfahren nach Anspruch 1,
**dadurch gekennzeichnet, dass** die Kühleinrichtung (12), vorzugsweise auch weitere Hilfsbetriebe für den Betrieb des Generators (10), aus dem zweiten Teilnetz (3) oder aus einem weiteren Teilnetz, das direkt oder indirekt aus dem zweiten Teilnetz (3) gespeist wird, mit Strom versorgt wird bzw. werden.

3. Verfahren nach einem der vorhergehenden Ansprüche,
**dadurch gekennzeichnet, dass** der Generator (10) nach Abkühlung der Erregerwicklung (11) auf eine vorgegebene Temperatur von dem Notbetrieb in den Normalbetrieb umgeschaltet wird.

4. Verfahren nach einem der vorhergehenden Ansprüche,
**dadurch gekennzeichnet, dass** die Umschaltung des Generators (10) von dem Normalbetrieb in den Notbetrieb erst nach Ablauf einer vordefinierten Zeitspanne nach dem Ausfall der Kühleinrichtung (12) oder nach Feststellung einer Erwärmung der Erregerwicklung (11) auf eine vorgegebene Temperatur erfolgt.

5. Verfahren nach einem der vorhergehenden Ansprüche,
**dadurch gekennzeichnet, dass** der Generator (10) als eine Synchronmaschine mit einer rotierenden Erregerwicklung (11) ausgebildet ist.

6. Verfahren nach einem der vorhergehenden Ansprüche,
**dadurch gekennzeichnet, dass** die Erregerwicklung (11) als eine Supraleiter-Wicklung, insbesondere eine Hoch-Temperatur-Supraleiter (HTS)- Wicklung, ausgebildet ist.

7. Verfahren nach einem der vorhergehenden Ansprüche,
**dadurch gekennzeichnet, dass** das elektrische Netz (1) als ein Inselnetz, z.B. als ein Bordnetz eines Schiffes oder einer Offshore-Plattform, ausgebildet ist.

8. Verfahren nach einem der vorhergehenden Ansprüche,
**dadurch gekennzeichnet, dass** die Teilnetze (2, 3) über einen oder mehrere Spannungswandler (40), insbesondere Transformatoren, miteinander gekoppelt sind.

9. Elektrisches Netz (1), umfassend
- ein erstes Teilnetz (2) mit einer ersten Nennspannung (UN1) und ein zweites Teilnetz (3) mit einer zweiten Nennspannung (UN2), wobei die erste Nennspannung (UN1) größer ist als die zweite Nennspannung (UN2),
- zumindest einen Generator (10) mit einer Erregerwicklung (11), wobei der Generator (10) in einem Normalbetrieb, in dem er Strom in das erste Teilnetz (2) einspeist, mit einem ersten Erregerstrom beaufschlagbar ist, der an die erste Nennspannung (UN1) des ersten Teilnetzes (2) angepasst ist,
- wobei der Generator (10) eine Kühleinrichtung (12) zur Kühlung der Erregerwicklung (11) umfasst,
**dadurch gekennzeichnet dass**
der Generator (10) derart ausgebildet ist, dass er nach einem Ausfall der Kühleinrichtung (12) von dem Normalbetrieb in einen Notbetrieb umschaltbar ist, in dem er Strom in das zweite Teilnetz (3) einspeist, wobei in dem Notbetrieb die Erregerwicklung (11) mit einem zweiten Erregerstrom beaufschlagbar ist, der kleiner ist als der erste Erregerstrom und der an die zweite Nennspannung (UN2) des zweiten Teilnetzes (3) angepasst ist.

10. Elektrisches Netz (1) nach Anspruch 9,
**dadurch gekennzeichnet, dass** die Kühleinrichtung (12), vorzugsweise auch weitere Hilfsbetriebe für den Betrieb des Generators (10), zur Stromversorgung an das zweite Teilnetz (3) oder an ein weiteres direkt oder indirekt aus dem zweiten Teilnetz (3) gespeistes Teilnetz angeschlossen ist bzw. sind.

11. Elektrisches Netz (1) nach einem der Ansprüche 9 bis 10, **gekennzeichnet durch** eine Steuer- und/oder Regelungseinrichtung (14) zur Umschaltung des Generators (10) von dem Normalbetrieb in den Notbetrieb.

12. Elektrisches Netz (1) nach Anspruch 11,
**dadurch gekennzeichnet, dass** die Steuer- und/oder Regelungseinrichtung (14) derart ausgebildet ist, dass sie den Generator (10) erst nach Ablauf einer vordefinierten Zeitspanne nach dem Ausfall der Kühleinrichtung (12) oder nach Feststellung einer Erwärmung der Erregerwicklung (11) auf eine vorgegebene Temperatur von dem Normalbetrieb in den Notbetrieb umschaltet.

13. Elektrisches Netz (1) nach Anspruch 10 oder 11,
**dadurch gekennzeichnet, dass** die Steuer- und/oder Regelungseinrichtung (14) derart ausgebildet ist, dass sie den Generator (10) nach Abkühlung der Erregerwicklung (11) auf eine vorgegebene Temperatur von dem Notbetrieb in den Normalbetrieb umschaltet.

14. Elektrisches Netz (1) nach einem der Ansprüche 9 bis 13, **gekennzeichnet durch** einen Wechselschalter (16) zum wahlweisen Anschluss des Generators (10) an das erste Teilnetz (2) oder an das zweite Teilnetz (3).

15. Elektrisches Netz (1) nach einem der Ansprüche 9 bis 14, **dadurch gekennzeichnet, dass** der Generator (10) als eine Synchronmaschine mit einer rotierenden Erregerwicklung (11) ausgebildet ist.

16. Elektrisches Netz (1) nach einem der Ansprüche 9 bis 15, **dadurch gekennzeichnet, dass** die Erregerwicklung (11) als eine Supraleiter-Wicklung, insbesondere eine Hoch-Temperatur-Supraleiter (HTS)- Wicklung, ausgebildet ist.

17. Elektrisches Netz (1) nach einem der Ansprüche 9 bis 16, **dadurch gekennzeichnet, dass** das elektrische Netz (1) als ein Inselnetz, z.B. als ein Bordnetz eines Schiffes oder einer Offshore-Plattform, ausgebildet ist.

18. Elektrisches Netz (1) nach einem der Ansprüche 9 bis 17, **dadurch gekennzeichnet, dass** die Teilnetze (2, 3) über einen oder mehrere Spannungswandler (40), insbesondere Transformatoren, miteinander gekoppelt sind.

## Claims

1. Method for operating a generator (10) in an electrical system (1), wherein the electrical system (1) comprises a first subsystem (2) having a first rated voltage (UN1) and at least one second subsystem (3) having a second rated voltage (UN2), the first rated voltage (UN1) being greater than the second rated voltage (UN2),
wherein the generator (10) has a field winding (11) which during normal operation of the generator (10) in which it feeds current to the first subsystem (2) has a first field current applied to it which is matched to the first rated voltage (UN1) of the first subsystem (2),
and wherein the generator (10) comprises a cooling device (12) for cooling the field winding (11),
**characterised in that**, after failure of the cooling device (12), the generator (10) is switched from normal mode to emergency mode in which it feeds current to the second subsystem (3), wherein in emergency mode the field winding (11) has a second field current applied to it which is smaller than the first field current and which is matched to the second rated voltage (UN2) of the second subsystem (3).

2. Method according to claim 1,
**characterised in that** the cooling device (12), preferably also other auxiliaries for operating the generator (10), is/are supplied with power from the second subsystem (3) or from another subsystem which is fed directly or indirectly from the second subsystem (3).

3. Method according to one of the preceding claims,
**characterised in that** the generator (10) is switched from emergency mode to normal mode when the field winding (11) has cooled down to a specified temperature.

4. Method according to one of the preceding claims,
**characterised in that** the switching of the generator (10) from normal mode to emergency mode only takes place when a predefined time period has elapsed following failure of the cooling device (12) or when heating of the field winding (11) to a specified temperature is detected.

5. Method according to one of the preceding claims,
**characterised in that** the generator (10) is embodied as a synchronous machine having a rotating field winding (11).

6. Method according to one of the preceding claims,
**characterised in that** the field winding (11) is embodied as a superconductor winding, in particular as a high temperature superconductor (HTS) winding.

7. Method according to one of the preceding claims,
**characterised in that** the electrical system (1) is embodied as a stand-alone system, e.g. as an electrical system on a ship or offshore platform.

8. Method according to one of the preceding claims,
**characterised in that** the subsystems (2, 3) are interconnected via one or more voltage converters (40), particularly transformers.

9. Electrical system (1), comprising
- a first subsystem (2) having a first rated voltage (UN1) and a second subsystem (3) having a second rated voltage (UN2), wherein the first rated voltage (UN1) is greater than the second rated voltage (UN2),
- at least one generator (10) having a field winding (11), wherein during normal operation in which it feeds current to the first subsystem (2) the generator (10) can have a first field current applied to it which is matched to the first rated voltage (UN1) of the first subsystem (2),
- wherein the generator (10) comprises a cooling device (12) for cooling the field winding (11),
**characterised in that** the generator (10) is designed such that, after failure of the cooling device (12), it can switch from normal mode to emergency mode in which it feeds current to the second subsystem (3), wherein in emergency mode the field winding (11) can have a second field current applied to it which is smaller than the first field current and which is matched to the second rated voltage (UN2) of the second subsystem (3).

10. Electrical system (1) according to claim 9,
**characterised in that**, for power supply, the cooling device (12), preferably also other auxiliaries for operating the generator (10), is/are connected to the second subsystem (3) or to another subsystem supplied directly or indirectly from the second subsystem (3).

11. Electrical system (1) according to one of claims 9 to 10,
**characterised by** an open and/or closed loop control device (14) for switching the generator (10) from normal mode to emergency mode.

12. Electrical system (1) according to claim 11,
**characterised in that** the open and/or closed loop control device (14) is designed such that it only switches the generator (10) from normal mode to emergency mode after a specified time has elapsed following failure of the cooling device (12) or after heating of the field winding (11) to a specified temperature is detected.

13. Electrical system (1) according to claim 10 or 11,
**characterised in that** the open and/or closed loop control device (14) is designed such that it switches the generator (10) from emergency mode to normal mode when the field winding (11) has cooled down to a specified temperature.

14. Electrical system (1) according to one of claims 9 to 13,
**characterised by** a two-way switch (16) for optionally connecting the generator (10) to the first subsystem (2) or to the second subsystem (3).

15. Electrical system (1) according to one of claims 9 to 14,
**characterised in that** the generator (10) is embodied as a synchronous machine having a rotating field winding (11).

16. Electrical system (1) according to one of claims 9 to 15,
**characterised in that** the field winding (11) is implemented as a superconductor winding, in particular a high temperature superconductor (HTS) winding.

17. Electrical system (1) according to one of claims 9 to 16,
**characterised in that** the electrical system (1) is embodied as a stand-alone system, e.g. as an electrical system on a ship or offshore platform.

18. Electrical system (1) according to one of claims 9 to 17,
**characterised in that** the subsystems (2, 3) are interconnected via one or more voltage converters (40), particularly transformers.

## Revendications

1. Procédé pour faire fonctionner un générateur (10) dans un réseau (1) électrique, le réseau (1) électrique comprenant un premier réseau (2) partiel ayant une première tension (UN1) nominale et au moins un deuxième réseau (3) partiel ayant une deuxième tension (UN2) nominale, la première tension (UN1) nominale étant plus haute que la deuxième tension (UN2) nominale, le générateur (10) ayant un enroulement (11) d'excitation, qui, lorsque le générateur (10) est en fonctionnement normal, dans lequel il injecte du courant dans le premier réseau (2) partiel, est alimenté en un premier courant d'excitation adapté à la première tension (UN1) nominale du premier réseau (2) partiel,
et dans lequel le générateur (10) comprend un dispositif (12) de refroidissement pour refroidir l'enroulement (11) d'excitation,
**caractérisé en ce que** le générateur (10) passe, après une défaillance du dispositif (12) de refroidissement, du fonctionnement normal à un fonctionnement d'urgence, dans lequel il injecte du courant dans le deuxième réseau (3) partiel, dans lequel dans le fonctionnement d'urgence, l'enroulement (11) d'excitation est alimenté en un deuxième courant d'excitation, qui est moins intense que le premier courant d'excitation et qui est adapté à la deuxième tension (UN2) nominale du deuxième courant (3) partiel.

2. Procédé suivant la revendication 1,
**caractérisé en ce que** l'on alimente en courant le dispositif (12) de refroidissement, de préférence également d'autres équipements auxiliaires pour le fonctionnement du générateur, (10) à partir du deuxième réseau (3) partiel ou d'un autre réseau partiel, qui est alimenté directement ou indirectement à partir du deuxième réseau (3) partiel.

3. Procédé suivant l'une des revendications précédentes,
**caractérisé en ce que** l'on fait passer le générateur (10), après refroidissement de l'enroulement (11) d'excitation à une température donnée à l'avance, du fonctionnement d'urgence au fonctionnement normal.

4. Procédé suivant l'une des revendications précédentes,
**caractérisé en ce que** le passage du générateur (10) du fonctionnement normal au fonctionnement d'urgence ne s'effectue qu'après expiration d'un laps de temps défini à l'avance, après la défaillance du dispositif (12) de refroidissement ou après constatation d'un échauffement de l'enroulement (11) d'excitation à une température donnée à l'avance.

5. Procédé suivant l'une des revendications précédentes,
**caractérisé en ce que** le générateur (10) est constitué en machine synchrone ayant un enroulement (11) d'excitation tournant.

6. Procédé suivant l'une des revendications précédentes,
**caractérisé en ce que** l'enroulement (11) d'excitation est constitué sous la forme d'un enroulement à supraconducteur, notamment sous la forme d'un enroulement à supraconducteur à haute température (HTS).

7. Procédé suivant l'une des revendications précédentes,
**caractérisé en ce que** le réseau (1) électrique est constitué sous la forme d'un réseau indépendant, par exemple sous la forme d'un réseau de bord d'un bâtiment de navigation ou d'une plateforme offshore.

8. Procédé suivant l'une des revendications précédentes,
**caractérisé en ce que** les réseaux (2, 3) partiels sont connectés entre eux par un ou par plusieurs convertisseurs (40) de tension, notamment par des transformateurs.

9. Réseau (1) électrique, comprenant
- un premier réseau (2) partiel ayant une première tension (UN1) nominale et un deuxième réseau (3) partiel ayant une deuxième tension n(UN2) nominale, la première tension (UN1) nominale étant plus haute que la deuxième tension (UN2) nominale,
- au moins un générateur (10) ayant un enroulement (11) d'excitation, le générateur (10) pouvant être, dans un fonctionnement normal dans lequel il injecte du courant dans le premier réseau (2) partiel, alimenté en un premier courant d'excitation adapté à la première tension (UN1) nominale du premier réseau (2) partiel,
- dans lequel le générateur (10) comprend un dispositif (12) de refroidissement pour refroidir l'enroulement (11) d'excitation,
**caractérisé en ce que** le générateur (10) est constitué de manière à pouvoir, après une défaillance du dispositif de refroidissement, passer du fonctionnement normal à un fonctionnement d'urgence, dans lequel il injecte du courant dans le deuxième réseau (3) partiel, dans lequel, dans le fonctionnement d'urgence, l'enroulement (11) d'excitation peut être alimenté en un deuxième courant d'excitation, qui est moins intense que le premier courant d'excitation et qui est adapté à la deuxième tension (UN2) nominale du deuxième réseau (3) partiel.

10. Réseau (1) électrique suivant la revendication 9,
**caractérisé en ce que** le dispositif (12) de refroidissement, de préférence également d'autres équipements auxiliaires pour le fonctionnement du générateur (10), est ou sont connectés, pour l'alimentation en courant, au deuxième réseau (3) partiel ou à un autre réseau partiel alimenté directement ou indirectement à partir du deuxième réseau (3) partiel.

11. Réseau (1) électrique suivant l'une des revendications 9 à 10,
**caractérisé par** un dispositif (14) de commande et/ou de régulation pour faire passer le générateur (10) du fonctionnement normal au fonctionnement d'urgence.

12. Réseau (1) électrique suivant la revendication 11,
**caractérisé en ce que** le dispositif (14) de commande et/ou de régulation est constitué de manière à faire passer, du fonctionnement normal au fonctionnement d'urgence, le générateur (10), seulement après expiration d'un laps de temps défini à l'avance après la défaillance du dispositif (12) de refroidissement ou après constatation d'un échauffement de l'enroulement (11) d'excitation à une température donnée à l'avance.

13. Réseau (1) électrique suivant la revendication 10 ou 11,
**caractérisé en ce que** le dispositif (14) de commande et/ou de régulation est constitué de manière à faire passer le générateur (10) du fonctionnement d'urgence au fonctionnement normal, après refroidissement de l'enroulement (11) d'excitation à une température donnée à l'avance.

14. Réseau (1) électrique suivant l'une des revendications 9 à 13,
**caractérisé par** un commutateur (16) à deux positions pour la connexion, au choix, du générateur (10) au premier réseau (2) partiel ou au deuxième réseau (3) partiel.

15. Réseau (1) électrique suivant l'une des revendications 9 à 14,
**caractérisé en ce que** le générateur (10) est constitué sous la forme d'une machine synchrone ayant un enroulement (11) d'excitation tournant.

16. Réseau (1) électrique suivant l'une des revendications 9 à 15,
**caractérisé en ce que** l'enroulement (11) d'excitation est constitué sous la forme d'un enroulement à supraconducteur, notamment sous la forme d'un enroulement à supraconducteur à haute température (HTS).

17. Réseau (1) électrique suivant l'une des revendications 9 à 16,
**caractérisé en ce que** le réseau (1) électrique est constitué sous la forme d'un réseau indépendant, par exemple sous la forme d'un réseau de bord d'un bâtiment de navigation ou d'une plateforme offshore.

18. Réseau (1) électrique suivant l'une des revendications 9 à 17,
**caractérisé en ce que** les réseaux (2, 3) partiels sont connectés entre eux par un ou par plusieurs convertisseurs (40) de tension, notamment par des transformateurs.
